# EUROPEAN PATENT SPECIFICATION

(11) **EP 3 409 932 B1**
(45) Date of publication and mention of the grant of the patent: **31.03.2021**
(21) Application number: 16888111.8
(22) Date of filing: 16.11.2016
(51) Int. Cl.: F02D 41/34, F02D 41/06, F02B 23/10, F02D 19/08, F02D 21/08, F02D 21/10, F02M 26/00, F02M 26/41, F02M 61/04, F02M 61/14, F02M 69/00, F02P 5/15, F02D 41/30, F02D 19/06, F02D 41/40, F02D 41/38, F02D 41/00

(54) **FUEL INJECTION VALVE CONTROL DEVICE**
KRAFTSTOFFEINSPRITZVENTILSTEUERUNGSVORRICHTUNG
DISPOSITIF DE COMMANDE DE SOUPAPE D'INJECTION DE CARBURANT

(30) Priority: 29.01.2016 JP 2016015030
(43) Date of publication of application: 05.12.2018
(73) Proprietor: Hitachi Automotive Systems, Ltd., Hitachinaka-shi, Ibaraki 312-8503 (JP)
(72) Inventor: HOSAKA, Tomoyuki, Tokyo 100-8280 (JP); SUGII, Taisuke, Tokyo 100-8280 (JP); ISHII, Eiji, Tokyo 100-8280 (JP); SUKEGAWA, Yoshihiro, Tokyo 100-8280 (JP); SARUWATARI, Masayuki, Hitachinaka-shi Ibaraki 312-8503 (JP); ORYOJI, Kazuhiro, Tokyo 100-8280 (JP)
(74) Representative: MERH-IP Matias Erny Reichl Hoffmann Patentanwälte PartG mbB
(86) International application number: PCT/JP2016/083876
(87) International publication number: WO 2017/130526

(56) References cited:
- DE-A1-102004 037 971
- DE-A1-102005 028 553
- GB-A- 2 520 017
- JP-A- S53 306
- JP-A- S53 306
- JP-A- S6 035 115
- JP-A- H09 264 180
- JP-A- H09 264 180
- JP-A- H10 331 642
- JP-A- 2000 008 898
- JP-A- 2001 248 443
- JP-A- 2010 196 506
- JP-A- 2010 196 506
- JP-A- 2014 529 042
- JP-A- 2016 006 325
- US-A1- 2006 054 130

## Description

### Technical Field

The present invention relates to a fuel injection valve control device that is used in an internal combustion engine such as a gasoline engine.

### Background Art

Recently, demands for improvement in fuel consumption of gasoline engines in vehicles have increased and a cylinder injection type engine that directly injects fuel into a combustion chamber, ignites an air-fuel mixture of the injected fuel and sucked air with an ignition plug, and explodes the air-fuel mixture has been widely used as an engine excellent in the fuel consumption. However, in the cylinder injection type engine, because a distance from an injection point to a wall surface is short, the fuel is likely to adhere to the inside of the combustion chamber and suppression of a particle matter (PM) generated by incomplete combustion of the fuel adhered to the wall surface having a low temperature becomes a problem. To solve this problem and develop a direct injection engine with low fuel consumption and low exhaust gas, optimization of combustion in the combustion chamber is necessary.

There are various operation situations such as a high-load operation, a low-load operation, and cold starting in operations of the vehicles.

Therefore, in the cylinder injection type engine, to perform optimum combustion depending on the operation situations, homogeneous combustion for forming a homogeneous air-fuel mixture in a cylinder and burning the air-fuel mixture and stratified charge combustion for forming a thick air-fuel mixture around an ignition plug are used separately.

To achieve both the homogeneous combustion and the stratified charge combustion, a method has been suggested in which a plurality of fuel injection valves for directly injecting the fuel into the combustion chamber is provided for each cylinder. For example, PTL 1 describes technology in which two fuel injection valves are provided for each cylinder, a first fuel injection valve is used at the time of the homogeneous combustion, and a second fuel injection valve is used at the time of the stratified charge combustion. PTL 1 discloses technology in which a fuel injection valve with a large static flow is used at the time of the homogeneous combustion and a fuel injection valve with a small static flow and short penetration is used at the time of the stratified charge combustion.

### Citation List

JP 2000 0008898 A discloses a situation wherein a fuel air mixture is introduced when the piston is at a bottom center, thereafter, when the piston is moved to the top dead center water is injected by a water injection nozzle to cool the cylinder. A further engine, wherein with a first valve during down stroke fuel is injected and wherein with a second valve during an upstroke fuel is injected, is disclosed in JP H09 264180 A (D2).

Further engines having multiple injectors in one cylinder are disclosed in DE 10 2005 028553 A1 and DE 10 2004 037971 A1.

### Patent Literature

PTL 1: JP 2010-196506 A

### Summary of Invention

### Technical Problem

In the cylinder injection type engine, a homogeneous combustion mode in which, when a high-load operation is performed, fuel is injected in an intake stroke, a homogeneous air-fuel mixture is formed in the cylinder, and the air-fuel mixture is burned and a stratified charge combustion mode in which, when a load is relatively low, the fuel is injected at the latter stage of a compression stroke, a thick air-fuel mixture is stratified around an ignition plug and the air-fuel mixture is burned are known.

In the stratified charge combustion mode, burning is performed in a state in which an air-fuel ratio of the entire cylinder is larger than a theoretical air-fuel ratio. Therefore, to perform stable ignition, it is necessary to arrange fuel having an appropriate concentration around the ignition plug. For this reason, a spray guide system for arranging the fuel injection valve and the ignition plug in proximity to a center portion of an upper portion of the combustion chamber, injecting the fuel from the fuel injection valve to the vicinity of an electrode of the ignition plug, and igniting the fuel with the ignition plug is devised. In this system, because a distance from an injection point to the ignition plug is short, a required travel distance of the spray is very small. For this reason, a fuel injection valve having small penetration force (penetration) of the spray is required.

On the other hand, in the homogeneous combustion mode, fuel injection is performed in a state in which an intake valve is opened, the fuel is mixed by a gas flow (tumble flow) flowing from an intake port to the inside of the combustion chamber, and a homogeneous air-fuel mixture is formed. At this time, if the penetration force of the spray is not sufficient, the spray is caused to flow to the side of the wall surface in the cylinder by the tumble flow, and the homogeneous air-fuel mixture cannot be formed. For this reason, a fuel injection valve having large penetration force (long penetration) is required.

To solve such conflicting demands for the fuel injection valve, a method of providing a plurality of fuel injection valves for directly injecting the fuel into the combustion chamber for each cylinder is suggested.

In the technology disclosed in PTL 1, the two fuel injection valves are provided for each cylinder, the first fuel injection valve with the long penetration is used at the time of the homogeneous combustion, and the second fuel injection valve with the short penetration is used at the time of the stratified charge combustion, so that it is possible to form an optimum spray in each mode of the homogeneous combustion mode and the stratified charge combustion mode and achieve high performance.

In the intake stroke, the strength of the tumble flow changes depending on an engine speed. When the engine rotates at a high speed, a movement speed of a piston is high and a flow rate of gas flowing into the cylinder per unit time increases, so that the tumble flow becomes strong. For this reason, a spray with the long penetration is required to prevent the spray from being flown by the tumble flow.

On the other hand, when the engine rotates at a low speed, the movement speed of the piston is low and the flow rate of the gas flowing into the cylinder per unit time decreases, so that the tumble flow becomes weak. For this reason, mixing force by the tumble flow decreases and it is difficult to form a homogeneous air-fuel mixture in the cylinder.

In the technology disclosed in PTL 1, when the homogeneous combustion mode is set at the time of the low rotation and high load, the fuel injection valve with the long penetration is used in a state in which the tumble flow is weak and the mixing force is small. For this reason, adhesion of the fuel to the wall surface may increase and homogeneity may be deteriorated.

The present invention has been made in view of the above problem and an object thereof is to provide a fuel injection valve capable of forming a homogeneous air-fuel mixture in homogeneous combustion at a low engine speed and a control device thereof.

### Solution to Problem

In order to solve the aforementioned problem, it is provided a control device having the features defined in claim 1. Further preferred embodiments are defined in the dependent claims.

### Advantageous Effects of Invention

According to the present invention, a homogeneous air-fuel mixture can be formed in homogeneous combustion at a low engine speed. Other configurations, functions, and effects of the present invention will be described in detail in the following embodiments.

### Brief Description of Drawings

[FIG. 1] FIG. 1 is a diagram showing an outline of a configuration of an internal combustion engine according to the present invention.
[FIG. 2] FIG. 2 is a diagram showing a configuration of a cylinder center cross-section of an internal combustion engine according to a first embodiment of the present invention.
[FIG. 3] FIG. 3 is a diagram showing a fuel injection valve according to the first embodiment of the present invention.
[FIG. 4] FIG. 4 is an enlarged cross-sectional view of a lower end portion of the fuel injection valve according to the first embodiment of the present invention.
[FIG. 5] FIG. 5 is a flowchart of injection control according to the first embodiment of the present invention.
[FIG. 6] FIG. 6 is a combustion mode map according to the first embodiment of the present invention.
[FIG. 7] FIG. 7 is a schematic diagram of current pulses to operate a fuel injection valve and a fluid injection valve according to the first embodiment of the present invention.
[FIG. 8] FIG. 8 is a diagram showing a combustion chamber of the internal combustion engine according to the first embodiment of the present invention.
[FIG. 9] FIG. 9 is a diagram showing a relation of an injection speed and penetration of the fuel injection valve according to the present invention.
[FIG. 10] FIG. 10 is a diagram showing a relation of a total sum of in-cylinder motion energies of the internal combustion engine and an injection speed according to the present invention.
[FIG. 11] FIG. 11 is a flowchart of injection control using a fuel injection valve for stirring according to the first embodiment of the present invention.
[FIG. 12] FIG. 12 is a diagram showing a current pulse to operate the fuel injection valve according to the first embodiment of the present invention.
[FIG. 13] FIG. 13 is an enlarged cross-sectional view of the vicinity of a tip of a valve body of the fuel injection valve according to the first embodiment of the present invention.
[FIG. 14] FIG. 14 is a diagram showing a configuration of a cylinder center cross-section of the internal combustion engine according to the first embodiment of the present invention.
[FIG. 15] FIG. 15 is a diagram showing a configuration of a cylinder center cross-section of an internal combustion engine according to a second embodiment of the present invention.

### Description of Embodiments

Hereinafter, embodiments of the present invention will be described.

### First Embodiment

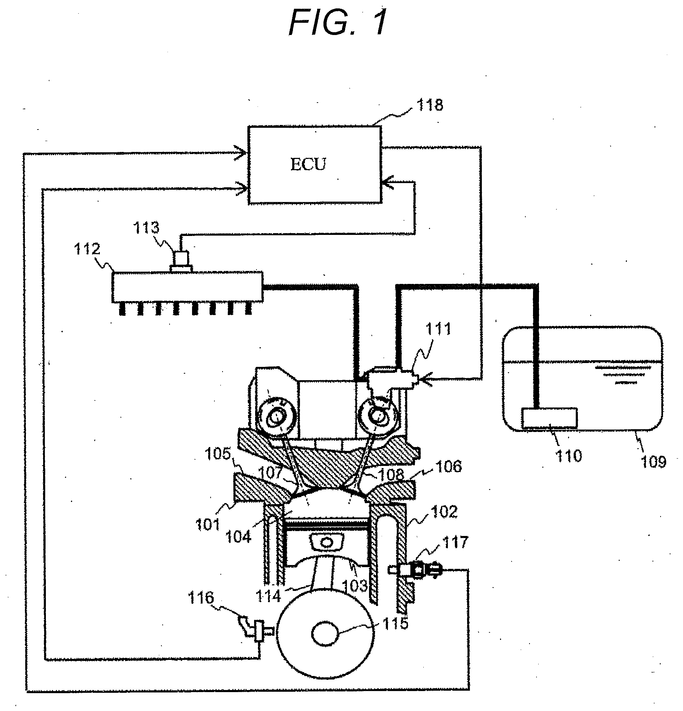

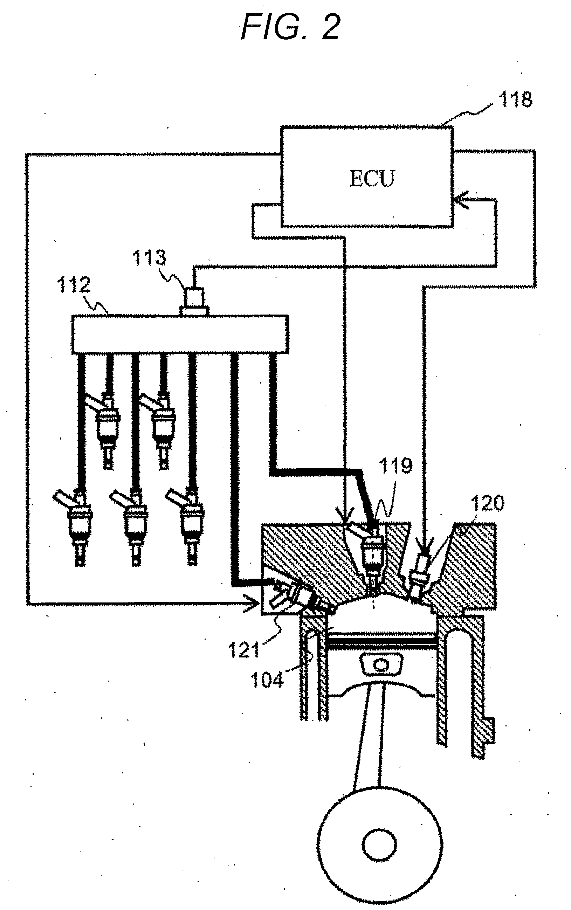

A control device of a fuel injection valve according to a first embodiment of the present invention will be described below using FIGS. 1 and 2.

FIG. 1 is a diagram showing an outline of a configuration of a cylinder injection type engine. A basic operation of the cylinder injection type engine will be described using FIG. 1. In FIG. 1, a combustion chamber 104 is formed by a cylinder head 101, a cylinder block 102, and a piston 103 inserted into the cylinder block 102 and an intake pipe 105 and an exhaust pipe 106 are branched into two parts toward the combustion chamber 104 and are connected. An intake valve 107 is provided in an opening portion of the intake pipe 105, an exhaust valve 108 is provided in an opening portion of the exhaust pipe 106, and the intake valve 107 and the exhaust valve 108 are operated to be opened and closed by a cam operation method.

The piston 103 is connected to a crankshaft 115 via a connecting rod 114 and an engine speed can be detected by a crank angle sensor 116. A value of the rotation speed is sent to an engine control unit (ECU) 118. A starter motor not shown in the drawings is connected to the crankshaft 115 and at the time of starting an engine, the crankshaft 115 can be rotated by the starter motor and the engine can be started. A water temperature sensor 117 is provided in the cylinder block 102 and can detect a temperature of engine cooling water not shown in the drawings. The temperature of the engine cooling water is sent to the ECU 118.

Although FIG. 1 describes only one cylinder, a collector not shown in the drawings is provided at the upstream side of the intake pipe 105 to distribute air for each cylinder. An air flow sensor and a throttle valve not shown in the drawings are provided at the upstream side of the collector and an amount of air sucked into the combustion chamber 104 can be adjusted by an opening degree of the throttle valve.

Fuel is stored in a fuel tank 109 and is sent to a high-pressure fuel pump 111 by a feed pump 110. The feed pump 110 boosts the fuel to about 0.3 MPa and sends the fuel to the high-pressure fuel pump 111. The fuel boosted by the high-pressure fuel pump 111 is sent to a common rail 112. The high-pressure fuel pump 111 boosts the fuel to about 30 MPa and sends the fuel to the common rail 112. A fuel pressure sensor 113 is provided in the common rail 112 to detect a fuel pressure. A value of the fuel pressure is sent to the ECU 118.

FIG. 2 is a diagram showing a configuration of a cylinder center cross-section of a cylinder injection type engine. A fuel injection valve 119 is provided in an upper portion of the cylinder in an axial direction and in a center portion of the cylinder in a radial direction. In addition, a fluid injection valve 121 is provided in a side surface portion in the radial direction. An ignition plug 120 is provided in the vicinity of the exhaust pipe 106. The ECU 118 can monitor signals of sensors and can control operations of devices such as the fuel injection valve 119, the ignition plug 120, and the high-pressure fuel pump 111. In a ROM of the ECU 118, setting values of various devices according to the engine speed, the water temperature, and the air-fuel ratio which are used generally are recorded as map data.

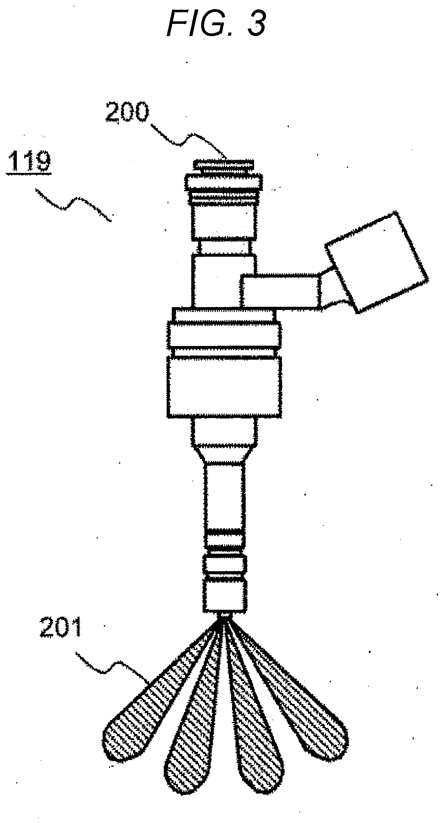

FIG. 3 is a diagram showing an outline of the fuel injection valve according to this embodiment. The fuel is supplied from a fuel supply port 200 and is supplied to the inside of the fuel injection valve. The electromagnetic fuel injection valve 119 shown in FIG. 3 is normally of a closed electromagnetic drive type and when there is no energization, the fuel is sealed. At this time, in the fuel injection valve for cylinder injection, the supplied fuel pressure is in a range of about 1 MPa to 50 MPa. In the case of an energization state, fuel injection is started. If the fuel injection is started, energy given as the fuel pressure is converted into motion energy, reaches an empty fuel injection hole in a lower end portion of the fuel injection valve, and is injected. The injected fuel is atomized by the shearing force with atmosphere to form fuel sprays 201.

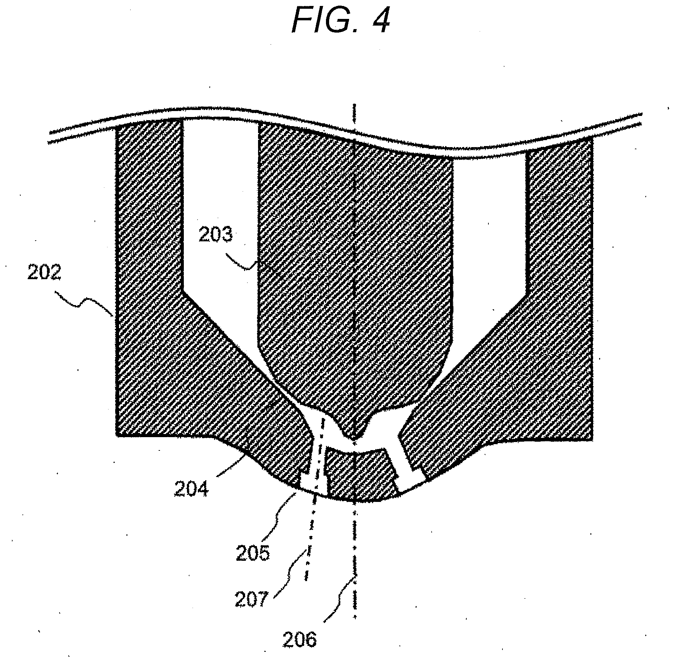

Next, a detailed shape of the fuel injection valve will be described using FIG. 4. FIG. 4 is an enlarged cross-sectional view of the lower end portion of the fuel injection valve that includes a seat member 202, a valve body 203, and the like. The seat member 202 includes a valve seat surface 204 and a plurality of fuel injection holes 205. The valve seat surface 204 and the valve body 203 axisymmetrically extend around a valve body center axis 206. The fuel passes through a gap between the seat member 202 and the valve body 203 and is injected from the injection hole 205. The fuel is injected in a direction of an injection hole axis 207 and is atomized by the shearing force with gas. In the fuel injection valve for the cylinder injection type engine, a nozzle form of the fuel injection valve 119, a fuel pressure, and the like are set such that a Sauter average particle size of an injected fuel droplet is approximately 30 µm or less.

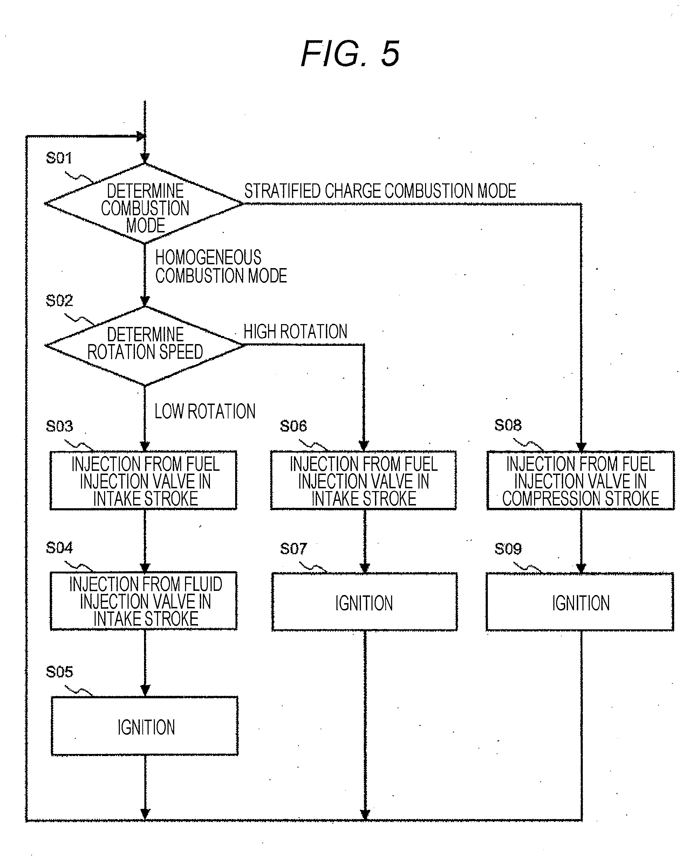

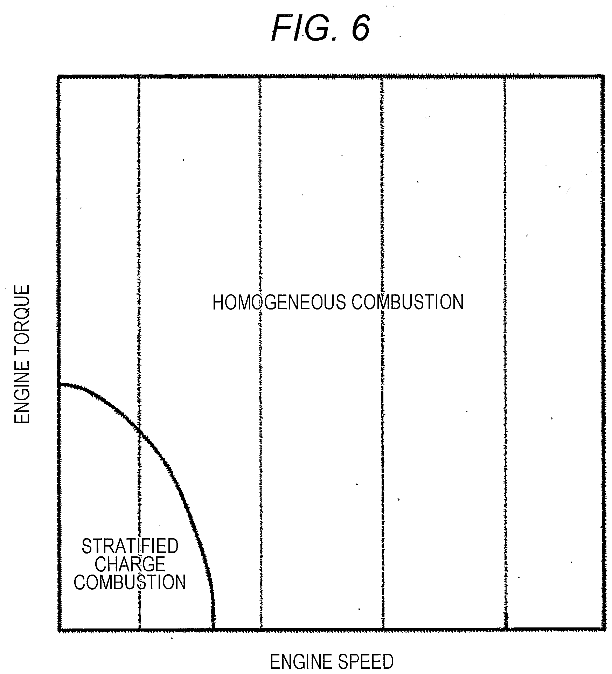

Next, a control method of homogeneous combustion using the fuel injection valve according to this embodiment will be described using FIG. 5. FIG. 5 is a flowchart of injection control according to this embodiment. When the fuel is injected, determination of a combustion mode shown by control S01 is first performed. The combustion mode is determined by an engine torque and a rotation speed by a combustion mode map shown in FIG. 6. When the combustion mode is determined to be a stratified charge combustion mode in control S01, control S08 and the following control are performed in a normal stratified charge combustion mode. When the combustion mode is determined to be a homogeneous combustion mode, determination of the rotation speed is performed in control S02. Here, when the rotation speed is a predetermined rotation speed or less, control S03 and the following controls are performed and in the other case, control S06 and the following controls are performed in a normal homogeneous combustion mode.

In control S03, after performing injection from the fuel injection valve in the intake stroke, injection from the fluid injection valve is performed and in control S03, after performing the injection from the fluid injection valve in the intake stroke, ignition is performed by control S05 in the latter half of the compression stroke.

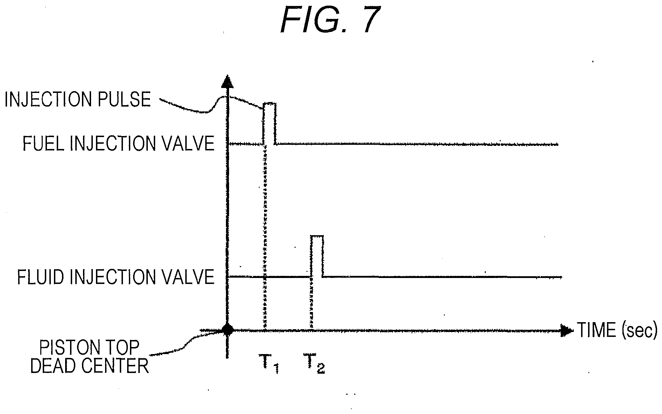

FIG. 7 is a schematic diagram of current pulses to operate the fuel injection valve and the fluid injection valve in this embodiment. In the internal combustion engine according to this embodiment, the fluid injection valve that is configured separately from the fuel injection valve and has a function of injecting a fluid is provided.

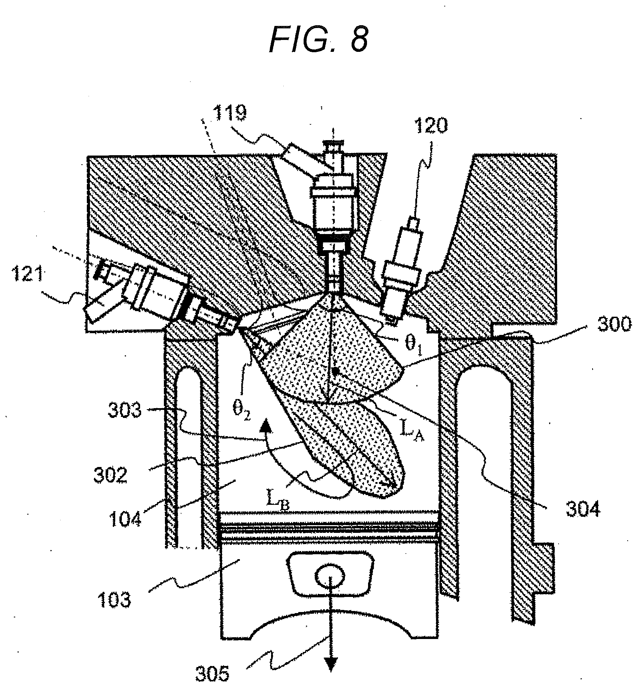

Next, a form in the combustion chamber will be described. FIG. 8 is a diagram showing the combustion chamber of the internal combustion engine according to this embodiment. The combustion chamber 104 is provided with the fluid injection valve 121 which is separated from the fuel injection valve 119 and serves as a stirring mechanism and driving of the fluid injection valve 121 is controlled by the ECU 118. More specifically, the ECU 118 includes a central processing unit (CPU). The ECU 118 performs control such that the fuel is injected from the fuel injection valve 119 according to a command from the CPU (control unit) of the ECU 118 and then controls the fuel injection valve 119 and the fluid injection valve 121 such that the fluid is injected from the fluid injection valve 121 and the fuel injected from the fuel injection valve is stirred.

The CPU (control unit) of the ECU 118 controls the fuel injection valve 119 by control S03 shown in FIG. 5, injects the fuel into the combustion chamber 104, and forms a spray 300. At this time, penetration and injection timing may be set such that penetration LA of the spray 300 injected from the fuel injection valve does not adhere to a wall surface. At the time of low rotation, because a tumble flow in the cylinder is weak, the spray 300 is not flown by the tumble flow but drifts in the cylinder.

Next, the CPU (control unit) of the ECU 118 controls the fluid injection valve 121 by control S04 and causes the fluid to be injected into the combustion chamber 104. An injected fluid 302 stirs the spray 300 injected from the fuel injection valve and forms a homogeneous air-fuel mixture in the combustion chamber 104. Generally, when the engine rotates at a low speed, the air flow in the cylinder is insufficient and it is difficult to form a homogeneous air-fuel mixture. In this embodiment, the fluid injection valve is caused to be delayed compared with the fuel injection valve and injects the fluid, thereby stirring the fuel in the combustion chamber. As a result, even when the air flow in the cylinder is slow, the homogeneous air-fuel mixture can be formed. According to this embodiment, it is possible to form the homogeneous air-fuel mixture in homogeneous combustion when the engine rotates at a low speed.

The CPU (control unit) of the ECU 118 controls the ignition plug 120 by control S05 shown in FIG. 5, ignites the ignition plug 120 with spark ignition, and burns the air-fuel mixture in the combustion chamber 104. Although the internal combustion engine including the ignition plug is described as an example in this embodiment, an effect according to this embodiment can be similarly obtained also in a compression self-ignition type internal combustion engine not including the ignition plug.

Although this embodiment does not limit the position of the fuel injection valve, the fuel injection valve 119 is arranged on the upper portion of the internal combustion engine, so that the fuel can be injected over a wider range. By injecting the fuel over the wide range, a degree of homogeneity of the air-fuel mixture can be increased. In addition, the fuel injection valve 119 is disposed in the vicinity of the ignition plug, so that combustion stability at the time of the stratified charge combustion can be increased.

Generally, in the case where the stratified charge combustion is performed by a spray guide system, if the injection is performed in the compression stroke, a spray angle decreases. When the fuel injection valve used for the stratified charge combustion is used in the intake stroke, the spray angle increases. Therefore, a spray angle θ₁ is preferably designed such that the fuel does not adhere to the cylinder wall surface in the intake stroke and a sufficient spray angle is obtained when the fuel is injected in the compression stroke.

On the other hand, the fluid injection valve 121 is provided on a side surface and forms a longitudinal vortex 303 in the cylinder. By forming the longitudinal vortex, it is possible to suitably stir the spray 300 injected from the fuel injection valve 119. By maximizing a distance between the fluid injection valve 121 and the wall surface, an amount of fuel adhering to the wall surface can be reduced when the fluid injected from the fluid injection valve 121 is the fuel.

In the homogeneous combustion at the high rotation, the tumble flow forms the vortex in the longitudinal direction and the homogeneous air-fuel mixture is formed in the cylinder by the vortex. At the time of the low rotation, the tumble flow is weak and it is difficult to form the longitudinal vortex. However, the longitudinal vortex is formed by the fluid injection valve 121, so that the homogeneous air-fuel mixture obtained at the time of the high rotation can be formed.

That is, the fuel injection valve 119 is attached to the upper portion of the internal combustion engine and the fluid injection valve 121 is attached to the side surface of the internal combustion engine, so that the degree of homogeneity of the air-fuel mixture can be increased.

However, an effect of the invention does not limit r the arrangement of the fuel injection valve and the arrangement of the ignition plug. For example, even when the arrangement of the fuel injection valve 119 and the fluid injection valve 121 is reversed, the effect of the invention is achieved. However, in the case where the fuel injection valve is arranged on the side portion and the ignition plug is arranged on the center, at least one spray direction may be oriented to the ignition plug to increase combustion stability at the time of the stratified charge combustion.

In this embodiment, when a top dead center is set to 0 deg, fuel injection timing is, for example, 60 deg. That is, the CPU (control unit) of the ECU 118 performs control such that the fuel is injected from the fuel injection valve 119, in a state in which the piston descends, and then controls the fuel injection valve 119 and the fluid injection valve 121 such that the fluid is injected from the fluid injection valve 121 and the fuel injected from the fuel injection valve is stirred. The piston descends as shown by a piston movement direction 305, so that the fluid flows downward into the cylinder, thereby assisting the flow of the fluid 302. As a result, the longitudinal vortex 303 in the cylinder is strengthened and the spray 300 injected from the fuel injection valve 119 can be suitably stirred.

In addition, an injection hole axis of the fuel injection valve 119 and an injection hole axis of the fluid injection valve 121 preferably intersect each other at the side of the ignition plug rather than the piston in a state in which the piston is at a bottom dead center. That is, as shown in FIG. 8, an intersection point 304 may exist at the side of the ignition plug rather than the piston. In addition, when the fluid 302 has an angle θ₂, the intersection point may exist in a range of the angle θ₂. When there is the intersection point, the fluid 302 injected from the fluid injection valve collides with the spray 300. The collision of the fluid 302 with the spray 300 causes an exchange of momentum, so that the fuel is stirred more suitably in the cylinder. From the above, the homogeneous air-fuel mixture can be suitably formed.

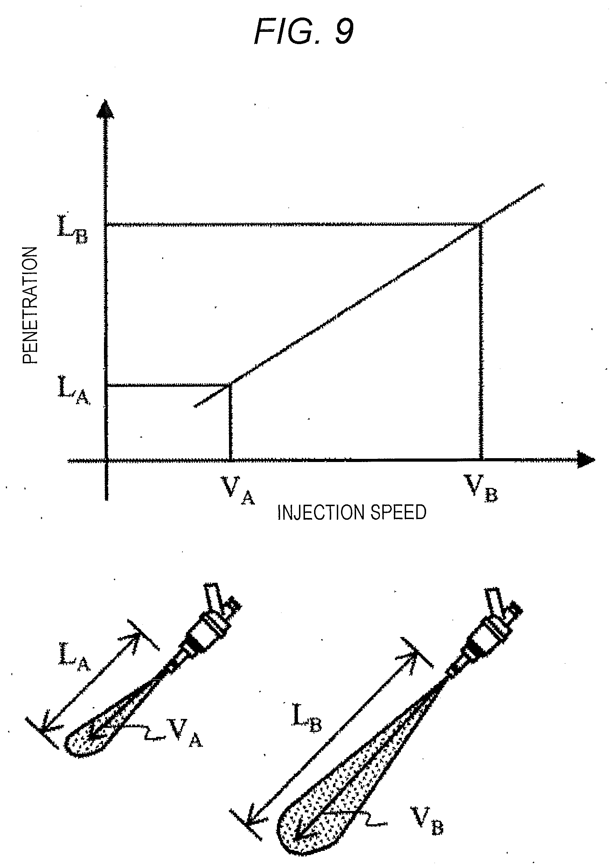

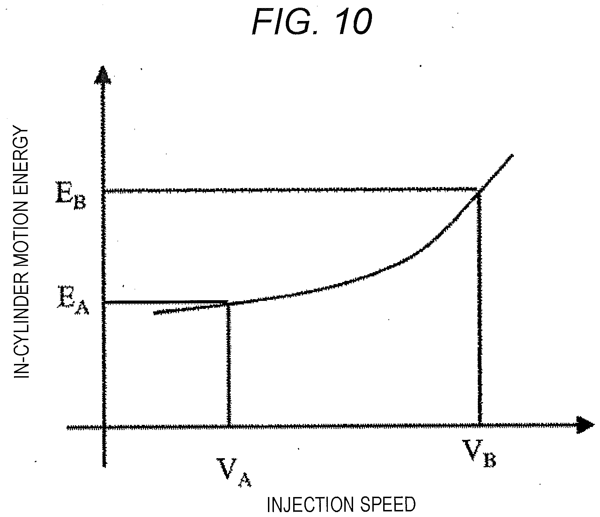

The fluid injection valve described above may be a fuel injection valve for stirring separated from the fuel injection valve and the CPU (control unit) of the ECU 118 may perform control such that penetration of the spray from the fuel injection valve for stirring is longer than penetration of the spray from the fuel injection valve. Thereby, the same effect of the invention is obtained. The principle thereof will be described below. FIG. 9 is a schematic diagram showing a general relation between an injection speed and penetration. When there is a relation of V_{A} < V_{B} between injection speeds V_{A} and V_{B}, penetrations has a relation of L_{A} < L_{B}. Therefore, when the injection speed is large, the penetration increases. Next, FIG. 10 is a schematic diagram showing a relation between the motion energy of the fluid and the injection speed. When there is a relation of V_{A} < V_{B} between the injection speeds V_{A} and V_{B}, motion energies of the fluid has a relation of E_{A} < E_{B}.

In FIG. 8, regarding the motion energy of the spray 300 injected from the fuel injection valve 119, the motion energy of the fluid 302 (in this embodiment, the fuel spray 302 for stirring) injected from the fluid injection valve 121 (in this embodiment, the fuel injection valve for stirring) is larger than the motion energy of the spray 300 injected from the fuel injection valve 119, the fluid flows downward into the cylinder, and the longitudinal vortex 303 is formed, so that it is possible to stir the spray 300 injected from the fuel injection valve 119 and form the homogeneous air-fuel mixture in the cylinder.

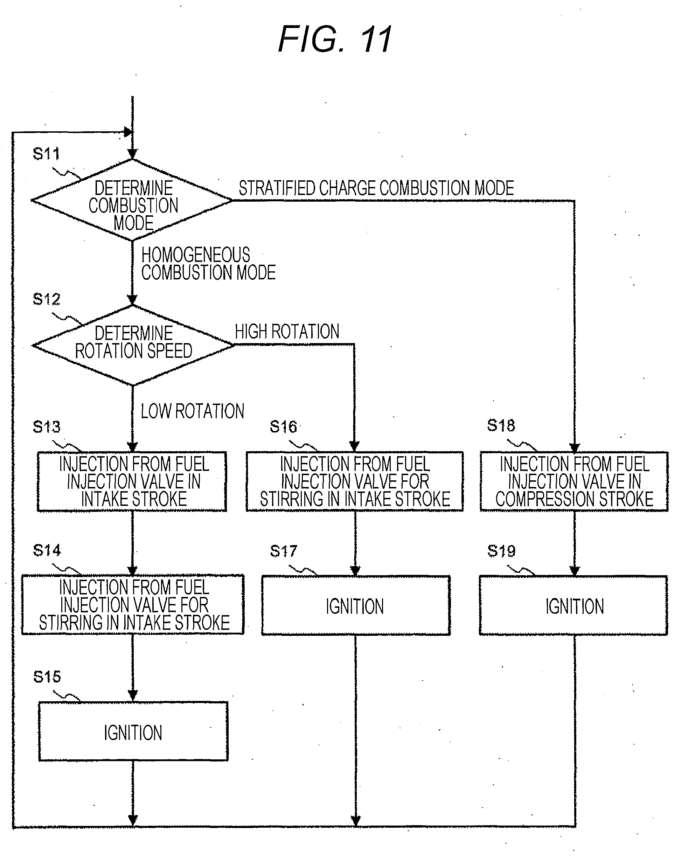

Next, a control method of the homogeneous combustion using the fuel injection valve for stirring according to this embodiment will be described using FIG. 10. FIG. 11 is a flowchart of the injection control according to this embodiment and is a diagram similar to FIG. 5. In control S13, after performing injection from the fuel injection valve 119 in the intake stroke, the fluid is injected from the fuel injection valve for stirring by control S14. The injected spray 302 stirs the spray 300 injected from the fuel injection valve 119 and forms a homogeneous air-fuel mixture in the combustion chamber 104.

When the high rotation is determined by control S12, control is preferably performed such that the fuel is injected from the fuel injection valve for stirring by control S16. This is because the tumble flow is strengthened when the engine rotates at a high speed and a spray with long penetration is required to cause the spray not to be flown by the tumble flow. For this reason, at the time of the high rotation, the fuel is injected from the fuel injection valve for stirring with long penetration, so that the homogeneous air-fuel mixture can be formed.

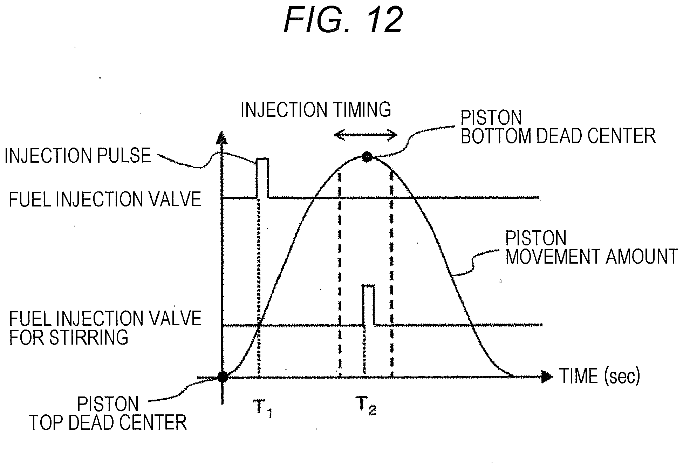

FIG. 12 shows a relation between current pulses to operate the fuel injection valve 119 and the fuel injection valve 121 for stirring and a piston position. Time T₁ is injection start time of the fuel injection valve 119 and time T₂ is injection start time of the fuel injection valve 121. By performing control such that the time T₂ in FIG. 11 is at the vicinity of the bottom dead center of the piston, fuel adhesion to the wall surface can be reduced. In this embodiment, the injection timing of the fuel injection valve 121 is, for example, -20 deg to +20 deg from the bottom dead center. By the above control, it is possible to achieve both reduction of an amount of fuel adhered to the wall surface and strengthening of the air flow in the cylinder. The injection timings of the time T₁ and the time T₂ are not limited to the intake stroke. However, to sufficiently perform mixing and vaporization, mixing and vaporization are preferably performed in the intake stroke while the piston descends.

In addition, the length of the penetration of the fuel injection valve 121 is preferably optimized such that the degree of homogeneity increases, in a range in which the fuel does not adhere to the piston. When the engine speed is low, the air flow in the combustion chamber 104 is slow and the fuel is likely to adhere to the combustion chamber wall surface or the piston. In FIG. 8, the penetration of the fuel spray 302 is set to be shortened, so that adhesion to the piston and the cylinder wall surface is reduced. For example, if penetration L_{B} is set as a distance from the fuel injection valve to the piston at a certain crank angle θ, the degree of homogeneity of the air-fuel mixture can be increased while the adhesion is suitably suppressed.

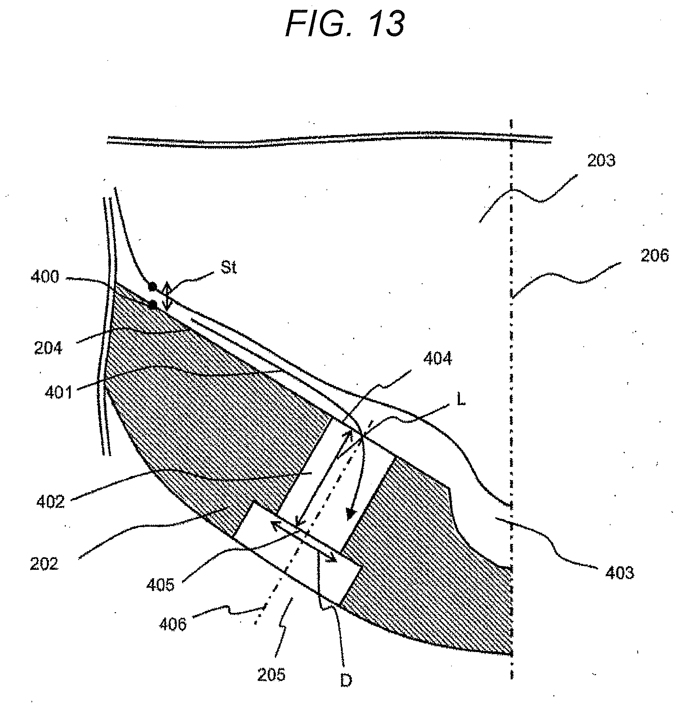

Next, a method of setting the length of the penetration will be described. FIG. 13 is an enlarged view of the vicinity of the injection hole 205 in the same cross-section as FIG. 4. The valve body 206 and the valve seat surface 204 contact at a ground point 400 when the valve is closed and are separated by a stroke amount St when the valve is opened. The fuel flows in a radial inward direction toward the center axis 206 of the valve body, passes through a path of a flow line 401, flows into an injection hole 402 from an injection hole inlet 404, and is injected from an injection hole outlet 405. A part of the fuel flows into a suck chamber 403 once and then flows into the injection hole 402. An amount of flowing fuel is controlled by the stroke amount St and a flow rate when the St is large is larger than a flow rate when St is small. Since a fluid speed increases when the flow rate is large, the penetration can be set by the stroke amount St.

The penetration can be set also by a ratio of a length L of the injection hole and an outlet diameter D; L/D. Generally, when L/D is large, the injection speed increases and the penetration becomes longer. For this reason, the fluid injection valve 121 is a fuel injection valve for stirring separated from the fuel injection valve 119 and the injection hole formed in the fuel injection valve for stirring has L/D larger than that in the fuel injection valve 119, so that it is possible to stir the spray 300 injected from the fuel injection valve 119 and form a homogeneous air-fuel mixture in the cylinder.

In addition, the penetration can be changed also in multi-stage injection using short pulse injection or short pulse injection. In the short pulse injection, because the penetration becomes short, the amount of adhesion to the wall surface can be further reduced. On the other hand, in the short pulse injection, because an injection amount per pulse decreases, a necessary amount of fuel is preferably injected by the multi-stage injection.

By using the present invention, it is possible to increase the combustion speed while increasing the degree of homogeneity of the air-fuel mixture. By improving the combustion speed, the combustion can be performed in a short period and a constant volume degree of the combustion process can be increased. By increasing the constant volume degree, heat efficiency is improved and fuel consumption efficiency is improved.

When the motion energy representing the magnitude of the average motion of the flow increases, turbulent motion energy representing the magnitude of the turbulence of the flow also increases. A propagation speed of a flame correlates with the turbulent motion energy and when the turbulence motion energy increases, an effect of improving the combustion speed can be expected.

That is, by performing control such that the fuel is injected from the fuel injection valve and then controlling the fluid injection valve such that the fluid is injected from the fluid injection valve and the fuel injected from the fluid injection valve is stirred, the turbulence motion energy in the cylinder increases and the combustion speed can be increased while the degree of homogeneity of the air-fuel mixture is increased.

This embodiment functions suitably when the engine speed is low and the air flow in the cylinder is slow. Therefore, it can be used at the time of starting the engine, for example. At the time of starting the engine, a warm-up operation may be performed for the purpose of warming up a catalyst. When the engine speed increases and a mode becomes a warm-up operation mode, control for raising the exhaust temperature is performed, for example, by retarding the ignition timing, so that the warm-up of the catalyst can be performed suitably while the degree of homogeneity of the air-fuel mixture is increased.

That is, the CPU (control unit) of the ECU 118 controls the fluid injection valve such that the fuel injected from the fuel injection valve is stirred in a state in which the piston of the internal combustion engine is at the vicinity of the bottom dead center after performing control such that injection is performed from the fuel injection valve in one stroke of the piston. If the internal combustion engine enters the warming-up operation, the CPU switches the control into control for retarding the ignition timing. As a result, the warm-up of the catalyst can be suitably performed while the degree of homogeneity of the air-fuel mixture is increased.

The effect of the present invention is not limited to the case where the rotation speed is low and the same effect can be obtained when the air flow in the cylinder is slow. For example, even when the intake valve is opened in the vicinity of the top dead center and the negative pressure in the cylinder is insufficient, the same effect is obtained.

### Second Embodiment

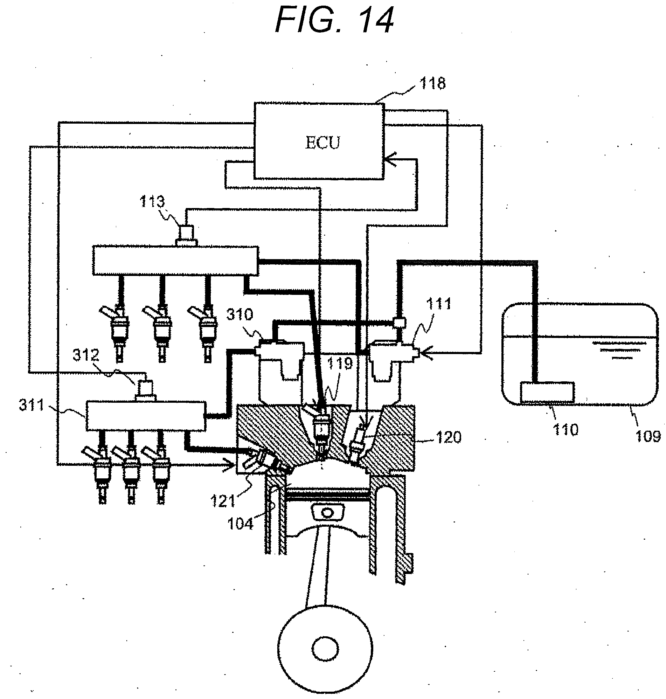

A fuel injection valve according to a second embodiment of the present invention will be described below using FIG. 14.

In the second embodiment shown in FIG. 14, a fuel injection valve 121 for stirring that is separated from a fuel injection valve 119 is provided as an air-fuel mixture stirring mechanism. The other configuration is the same as that in the first embodiment.

In the second embodiment shown in FIG. 14, a high-pressure fuel pump 310 separated from a high-pressure fuel pump 111 is provided and fuel is sent from a fuel tank 109 to the high-pressure fuel pump 310 by a feed pump 110. The fuel boosted by the high-pressure fuel pump 310 is sent to a common rail 311. A fuel pressure sensor 312 is provided in the common rail 311 to detect a fuel pressure. At this time, penetration of a spray injected from the fuel injection valve 121 for stirring can be lengthened by applying a higher fuel pressure to the fuel injection valve 121 for stirring as compared with the fuel injection valve 119. That is, the fluid injection valve 121 for stirring is a fuel injection valve for stirring separated from the fuel injection valve 119. The fuel pressure applied to the fuel injection valve 121 for stirring is configured to be larger with respect to the fuel injection valve 119, so that it is possible to stir a spray 300 injected from the fuel injection valve 119 and form a homogeneous air-fuel mixture in a cylinder.

### Third Embodiment

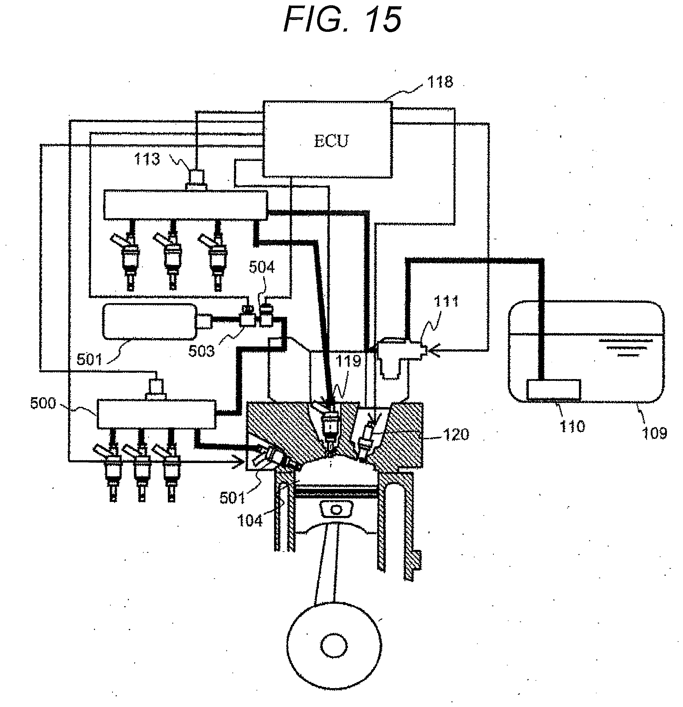

A fuel injection valve according to a third embodiment of the present invention will be described below using FIG. 15. In the third embodiment shown in FIG. 15, a gas injection valve 501 for stirring separated from a fuel injection valve 119, a common rail 500 for injecting gas, a tank 501 for storing the gas, a pressure adjustment valve 503 for adjusting a flow rate of the gas, and a flowmeter 504 are provided as an air-fuel mixture stirring mechanism. The other configuration is the same as that in the first embodiment.

Gas fuel such as CNG is injected from the gas injection valve 501. A control method is the same as that in the first embodiment.

In addition, air may be injected from the gas injection valve 501. In the case of injecting the air, a compressor instead of the tank for storing the gas may be provided and air may be supplied from an intake port. In addition, a part of recirculated exhaust gas may be injected from the gas injection valve 501. That is, a CPU (control unit) of an ECU 118 performs control such that the air or the recirculated exhaust is injected from the gas injection valve 501 for stirring and the fuel injected from the fuel injection valve 119 is stirred. In this case, similar to the air, the recirculated exhaust gas is boosted by the compressor and is injected from the gas injection valve 501.

When the gas is injected from the gas injection valve, the fuel does not adhere to a piston. Therefore, injection timing from a fluid injection valve is not related to a position of the piston. For example, the CPU (control unit) of the ECU 118 performs control such that the fuel is injected from the fuel injection valve in a state in which the piston is at 40 deg to 60 deg and then injection is preformed from the fluid injection valve in a state in which the piston is at 60 deg to 80 deg and the fuel is mixed with the gas early and is vaporized. As a result, adhesion of the fuel to a wall surface can be suitably reduced.

### Reference Signs List

101 cylinder head
102 cylinder block
103 piston
104 combustion chamber
105 intake pipe
106 exhaust pipe
107 intake valve
108 exhaust valve
109 fuel tank
110 feed pump
111 high-pressure fuel pump
112 common rail
113 fuel pressure sensor
114 connecting rod
115 crankshaft
116 crank angle sensor
117 water temperature sensor
118 ECU
119 fuel injection valve
120 ignition plug
121 fluid injection valve (fuel injection valve for stirring in a first embodiment)
200 fuel supply port
201 fuel spray
202 seat member
203 valve body
204 valve seat surface
205 injection hole
206 valve body center axis
207 injection hole axis
400 ground point
401 flow line
402 injection hole
403 suck chamber
404 injection hole inlet
405 injection hole outlet
406 injection hole center axis

## Claims

1. A control device for controlling a fuel injection valve (119) to inject fuel into an internal combustion engine, wherein
a fluid injection valve (121) that is configured separately from the fuel injection valve (119) and has a function of injecting a fluid is provided in the internal combustion engine and
the control device includes a control unit which is configured to control,
in the case if it is determined that the combustion mode of the engine is a homogeneous combustion mode and that the rotational speed of the engine is a predetermined rotational speed or less, the fuel injection valve (119) such that fuel is injected from the fuel injection valve (119) and to then control the fluid injection valve (121) such that the fluid is injected from the fluid injection valve (121) and the fuel injected from the fuel injection valve (119) is stirred, wherein
the control unit performs control such that injection is performed from the fuel injection valve (119) in a state in which a piston (103) of the internal combustion engine descends and then controls the fluid injection valve (121) such that the fluid is injected from the fluid injection valve (121) and the fuel injected form the fuel injection valve (119) is stirred.

2. The control device according to claim 1, wherein
the fuel injection valve (119) and the fluid injection valve (121) are arranged such that an injection hole axis (207) of the fuel injection valve (119) and an injection hole axis (207) of the fluid injection valve (121) intersect each other at the side of an ignition plug (120) rather than a piston (103) in a state in which the piston (103) is at a bottom dead center.

3. The control device according to claim 1, wherein
the fluid injection valve (121) is a fuel injection valve for stirring separated from the fuel injection valve (119),
the fuel injection valve (119) is attached to an upper portion of the internal combustion engine, and the fuel injection valve for stirring is attached to a side surface of the internal combustion engine.

4. The control device according to claim 1, wherein
the fluid injection valve (121) is a fuel injection valve for stirring separated from the fuel injection valve (119) and
the control unit is configured to control the fuel injection valve (119) and the fuel injection valve for stirring such that penetration of a spray from the fuel injection valve for stirring is longer than penetration of a spray from the fuel injection valve (119).

5. The control device according to claim 1, wherein the stirring is generated by the fluid injection valve (121) which is a fuel injection valve for stirring separated from the fuel injection valve (119), and wherein an injection hole (205, 402) is formed in the fuel injection valve for stirring, which injection hole (205, 402) is configured to have L/D larger than L/D of an injection hole (205, 402) formed in the fuel injection valve (119), wherein L is a length of the injection hole and D is an outlet diameter.

6. The control device according to claim 1, wherein the stirring is generated by
the fluid injection valve (121) which is a fuel injection valve for stirring (121) separated from the fuel injection valve (119) and a fuel pressure applied to the fuel injection valve for stirring (121) is configured to become larger than a fuel pressure applied to an injection hole formed in the fuel injection valve (119).

7. The control device according to claim 1, wherein the fluid injection valve (121) is a gas injection valve for stirring separated from the fuel injection valve (119) and the control unit performs control such that air or recirculated exhaust is injected from the gas injection valve for stirring and the fuel injected from the fuel injection valve is stirred (121).

8. The control device according to claim 1, wherein the fluid injection valve (121) is a gas injection valve for stirring separated from the fuel injection valve (119) and the control unit performs control such that gas fuel is injected from the gas injection valve for stirring (121) and the fuel injected from the fuel injection valve (119) is stirred (121) .

9. The control device according to claim 1, wherein
the control unit is configured that it controls the fluid injection valve (121) such that the fuel injected from the fuel injection valve (119) is stirred in a state in which a piston (103) of the internal combustion engine is at the vicinity of a bottom dead center after performing control such that injection is performed from the fuel injection valve (119) in one stroke of the piston (103) of the internal combustion engine when the internal combustion engine is started and switches control into control for retarding ignition timing when the internal combustion engine enters a warming-up operation.

10. The control device according to claim 1, wherein
the fluid injection valve (121) is a gas injection valve for stirring separated from the fuel injection valve (119) and
the control unit performs control such that the fuel is injected from the fuel injection valve (119) in a state in which a piston (103) of the internal combustion engine is at 40 deg to 60 deg and then controls the gas injection valve for stirring such that air or recirculated exhaust is injected from the gas injection valve for stirring in a state in which the piston (103) of the internal combustion engine is at 60 deg to 80 deg.

## Patentansprüche

1. Steuervorrichtung zum Steuern eines Kraftstoffeinspritzventils (119) zum Einspritzen von Kraftstoff in eine Brennkraftmaschine, wobei
ein Fluideinspritzventil (121), das getrennt von dem Kraftstoffeinspritzventil (119) konfiguriert ist und eine Funktion zum Einspritzen eines Fluids besitzt, in der Brennkraftmaschine vorgesehen ist und
die Steuervorrichtung eine Steuereinheit enthält, die konfiguriert ist, dann, wenn bestimmt wird, dass die Verbrennungsbetriebsart der Kraftmaschine eine homogene Verbrennungsbetriebsart ist und die Drehzahl der Kraftmaschine eine vorgegebene Drehzahl oder niedriger ist, das Kraftstoffeinspritzventil (119) in der Weise zu steuern, dass Kraftstoff von dem Kraftstoffeinspritzventil (119) eingespritzt wird, und dann das Fluideinspritzventil (121) in der Weise zu steuern, dass Fluid von dem Fluideinspritzventil (121) eingespritzt wird und der von dem Kraftstoffeinspritzventil (119) eingespritzte Kraftstoff rotatorisch bewegt wird,
wobei die Steuereinheit eine Steuerung in der Weise ausführt, dass die Einspritzung von dem Kraftstoffeinspritzventil (119) in einem Zustand ausgeführt wird, in dem sich ein Kolben (103) der Brennkraftmaschine nach unten bewegt, und dann das Fluideinspritzventil (121) in der Weise steuert, dass das Fluid von dem Fluideinspritzventil (121) eingespritzt wird und der von dem Kraftstoffeinspritzventil (119) eingespritzte Kraftstoff rotatorisch bewegt wird.

2. Steuervorrichtung nach Anspruch 1, wobei
das Kraftstoffeinspritzventil (119) und das Fluideinspritzventil (121) dafür ausgelegt sind, dass sich eine Einspritzlochachse (207) des Kraftstoffeinspritzventils (119) und eine Einspritzlochachse (207) des Fluideinspritzventils (121) näher auf der Seite einer Zündkerze (120) als auf jener eines Kolbens (103) schneiden, wenn sich der Kolben (103) an einem unteren Totpunkt befindet.

3. Steuervorrichtung nach Anspruch 1, wobei
das Fluideinspritzventil (121) ein von dem Kraftstoffeinspritzventil (119) getrenntes Kraftstoffeinspritzventil für rotatorische Bewegung ist,
das Kraftstoffeinspritzventil (119) an einem oberen Abschnitt der Brennkraftmaschine befestigt ist und das Kraftstoffeinspritzventil für rotatorische Bewegung an einer seitlichen Oberfläche der Brennkraftmaschine befestigt ist.

4. Steuervorrichtung nach Anspruch 1, wobei
das Fluideinspritzventil (121) ein von dem Kraftstoffeinspritzventil (119) getrenntes Kraftstoffeinspritzventil für rotatorische Bewegung ist und
die Steuereinheit konfiguriert ist, das Kraftstoffeinspritzventil (119) und das Kraftstoffeinspritzventil für rotatorische Bewegung in der Weise zu steuern, dass ein Eindringen eines Sprühstrahls von dem Kraftstoffeinspritzventil für rotatorische Bewegung länger ist als ein Eindringen eines Sprühstrahls von dem Kraftstoffeinspritzventil (119).

5. Steuervorrichtung nach Anspruch 1, wobei die rotatorische Bewegung durch das Fluideinspritzventil (121), das ein von dem Kraftstoffeinspritzventil (119) getrenntes Kraftstoffeinspritzventil für rotatorische Bewegung ist, erzeugt wird und wobei ein Einspritzloch (205, 402) in dem Kraftstoffeinspritzventil für rotatorische Bewegung ausgebildet ist, wobei dieses Einspritzloch (205, 402) so konfiguriert ist, dass es ein L/D-Verhältnis besitzt, das größer ist als ein L/D-Verhältnis eines Einspritzlochs (205, 402), das in dem Kraftstoffeinspritzventil (119) ausgebildet ist, wobei L eine Länge des Einspritzlochs ist und D ein Auslassdurchmesser ist.

6. Steuervorrichtung nach Anspruch 1, wobei die rotatorische Bewegung durch das Fluideinspritzventil (121), das ein von dem Kraftstoffeinspritzventil (119) getrenntes Kraftstoffeinspritzventil (121) für rotatorische Bewegung ist, erzeugt wird und ein Kraftstoffdruck, der auf das Kraftstoffeinspritzventil (121) für rotatorische Bewegung ausgeübt wird, so konfiguriert ist, dass er größer als ein Kraftstoffdruck wird, der auf ein in dem Kraftstoffeinspritzventil (119) ausgebildetes Einspritzloch ausübt wird.

7. Steuervorrichtung nach Anspruch 1, wobei das Fluideinspritzventil (121) ein von dem Kraftstoffeinspritzventil (119) getrenntes Gaseinspritzventil für rotatorische Bewegung ist und die Steuereinheit eine Steuerung in der Weise ausführt, dass Luft oder rückgeführtes Abgas von dem Gaseinspritzventil für rotatorische Bewegung eingespritzt wird und der von dem Kraftstoffeinspritzventil eingespritzte Kraftstoff rotatorisch bewegt wird (121).

8. Steuervorrichtung nach Anspruch 1, wobei das Fluideinspritzventil (121) ein von dem Kraftstoffeinspritzventil (119) getrenntes Gaseinspritzventil für rotatorische Bewegung ist und die Steuereinheit eine Steuerung in der Weise ausführt, dass gasförmiger Kraftstoff von dem Gaseinspritzventil (121) für rotatorische Bewegung eingespritzt wird und der von dem Kraftstoffeinspritzventil (119) eingespritzte Kraftstoff rotatorisch bewegt wird.

9. Steuervorrichtung nach Anspruch 1, wobei
die Steuereinheit so konfiguriert ist, dass sie das Fluideinspritzventil (121) in der Weise steuert, dass der von dem Kraftstoffeinspritzventil (119) eingespritzte Kraftstoff rotatorisch bewegt wird, wenn sich ein Kolben (103) der Brennkraftmaschine in der Umgebung eines unteren Totpunkts befindet, nachdem eine Steuerung in der Weise ausgeführt worden ist, dass die Einspritzung von dem Kraftstoffeinspritzventil (119) in einem einzelnen Hub des Kolbens (103) der Brennkraftmaschine ausgeführt wird, wenn die Brennkraftmaschine gestartet wird, und die Steuerung zu einer Steuerung mit nacheilendem Zündzeitpunkt umschaltet, wenn die Brennkraftmaschine in einen Aufwärmbetrieb eintritt.

10. Steuervorrichtung nach Anspruch 1, wobei
das Fluideinspritzventil (121) ein von dem Kraftstoffeinspritzventil (119) getrenntes Gaseinspritzventil für rotatorische Bewegung ist und
die Steuereinheit eine Steuerung in der Weise ausführt, dass der Kraftstoff von dem Kraftstoffeinspritzventil (119) in einen Zustand eingespritzt wird, in dem sich ein Kolben (103) der Brennkraftmaschine bei 40 Grad bis 60 Grad befindet, und dann das Gaseinspritzventil für rotatorische Bewegung in der Weise steuert, dass Luft oder rückgeführtes Abgas von dem Gaseinspritzventil für rotatorische Bewegung in einem Zustand eingespritzt wird, in dem sich der Kolben (103) der Brennkraftmaschine bei 60 Grad bis 80 Grad befindet.

## Revendications

1. Dispositif de commande destiné à commander une valve d'injection de carburant (119) pour injecter du carburant dans un moteur à combustion interne, dans lequel
une valve d'injection de fluide (121) qui est configurée séparément de la valve d'injection de carburant (119) et qui a une fonction d'injection d'un fluide est prévue dans le moteur à combustion interne, et
le dispositif de commande inclut une unité de commande qui est configurée pour commander,
dans un cas dans lequel il est déterminé que le mode de combustion du moteur est un mode de combustion homogène et que la vitesse de rotation du moteur est une vitesse de rotation prédéterminée ou inférieure, la valve d'injection de carburant (119) de sorte que du carburant est injecté depuis la valve d'injection de carburant (119), et pour ensuite commander la valve d'injection de fluide (121) de sorte que le fluide est injecté depuis la valve d'injection de fluide (121) et le fluide injecté depuis la valve d'injection de fluide (119) est agité, dans lequel l'unité de commande exécute une commande de sorte que l'injection est exécutée depuis la valve d'injection de carburant (119) dans un état dans lequel un piston (103) du moteur à combustion interne descend, et puis commande la valve d'injection de fluide (121) de sorte que le fluide est injecté depuis la valve d'injection de fluide (121) et le fluide injecté depuis la valve d'injection de carburant (119) est agité.

2. Dispositif de commande selon la revendication 1, dans lequel
la valve d'injection de carburant (119) et la valve d'injection de fluide (121) sont agencées de sorte qu'un axe de trou d'injection (207) de la valve d'injection de carburant (119) et un axe de trou d'injection (207) de la valve d'injection de fluide (121) se recoupent l'un l'autre au niveau du côté d'une bougie d'allumage (120) plutôt que d'un piston (103) dans un état dans lequel le piston (103) est au niveau d'un point mort bas.

3. Dispositif de commande selon la revendication 1, dans lequel la valve d'injection de fluide (121) est une valve d'injection de carburant d'agitation, séparée de la valve d'injection de carburant (119),
la valve d'injection de carburant (119) est attachée à une portion supérieure du moteur à combustion interne, et la valve d'injection de carburant d'agitation est attachée à une surface latérale du moteur à combustion interne.

4. Dispositif de commande selon la revendication 1, dans lequel
la valve d'injection de fluide (121) est une valve d'injection de carburant d'agitation, séparée de la valve d'injection de carburant (119), et
l'unité de commande est configurée pour commander la valve d'injection de carburant (119) et la valve d'injection de carburant d'agitation, de sorte qu'une pénétration d'une pulvérisation depuis la valve d'injection de carburant d'agitation est plus longue qu'une pénétration d'une pulvérisation depuis la valve d'injection de carburant (119).

5. Dispositif de commande selon la revendication 1, dans lequel l'agitation est générée par la valve d'injection de fluide (121) qui est une valve d'injection de carburant d'agitation, séparée de la valve d'injection de carburant (119), et dans lequel un trou d'injection (205, 402) est formé dans la valve d'injection de carburant d'agitation, lequel trou d'injection (205, 402) est configuré pour avoir un rapport L/D plus grand qu'un rapport L/D d'un trou d'injection (205, 402) formé dans la valve d'injection de carburant (119), dans lequel L est une longueur du trou d'injection et D est un diamètre de sortie.

6. Dispositif de commande selon la revendication 1, dans lequel l'agitation est générée par la valve d'injection de fluide (121) qui est une valve d'injection de carburant d'agitation (121), séparée de la valve d'injection de carburant (119), et une pression de carburant appliquée à la valve d'injection de carburant d'agitation (121) est configurée pour devenir plus grande qu'une pression de carburant appliquée à un trou d'injection formé dans la valve d'injection de carburant (119).

7. Dispositif de commande selon la revendication 1, dans lequel la valve d'injection de fluide (121) est une valve d'injection de gaz d'agitation, séparée de la valve d'injection de carburant (119), et l'unité de commande exécute une commande de sorte que de l'air ou du gaz d'échappement recyclé est injecté depuis la valve d'injection de gaz d'agitation et le carburant injecté depuis la valve d'injection de carburant est agité (121).

8. Dispositif de commande selon la revendication 1, dans lequel la valve d'injection de fluide (121) est une valve d'injection de gaz d'agitation, séparée de la valve d'injection de carburant (119), et l'unité de commande exécute une commande de sorte qu'un carburant gazeux est injecté depuis la valve d'injection de gaz d'agitation (121) et le carburant injecté depuis la valve d'injection de carburant (119) est agité.

9. Dispositif de commande selon la revendication 1, dans lequel
l'unité de commande est configurée de sorte qu'elle commande la valve d'injection de fluide (121) de sorte que le fluide injecté depuis la valve d'injection de fluide (119) est agité dans un état dans lequel un piston (103) du moteur à combustion interne est au voisinage d'un point mort bas après l'exécution d'une commande de sorte qu'une injection est exécutée depuis la valve d'injection de carburant (119) dans une course du piston (103) du moteur à combustion interne quand le moteur à combustion interne est démarré et commute une commande vers une commande pour retarder une temporisation d'allumage quand le moteur à combustion interne entre dans un fonctionnement de chauffe.

10. Dispositif de commande selon la revendication 1, dans lequel
la valve d'injection de fluide (121) est une valve d'injection de gaz d'agitation, séparée de la valve d'injection de carburant (119), et
l'unité de commande exécute une commande de sorte que le carburant est injecté depuis la valve d'injection de carburant (119) dans un état dans lequel un piston (103) du moteur à combustion interne est de 40 degrés à 60 degrés, et puis commande la valve d'injection de gaz d'agitation de sorte que de l'air ou du gaz d'échappement recyclé est injecté depuis la valve d'injection de gaz d'agitation dans un état dans lequel le piston (103) du moteur à combustion interne est de 60 degrés à 80 degrés.
